# FASCICULE DE BREVET EUROPEEN

(11) **EP 4 154 341 B1**
(45) Date de publication et mention de la délivrance du brevet: **28.01.2026**
(21) Numéro de dépôt: 21734395.3
(22) Date de dépôt: 19.05.2021
(51) Int. Cl.: H01M 8/22

(54) **DISPOSITIF DE PRODUCTION D'ENERGIE PAR GRADIENT DE SALINITE À TRAVERS UNE MEMBRANE À BASE DE FIBRES DE CELLULOSE RETICULÉES**
VORRICHTUNG ZUR ENERGIEERZEUGUNG DURCH SALZGEHALTGRADIENTEN DURCH EINE MEMBRAN AUF BASIS VERNETZTER CELLULOSEFASERN
DEVICE FOR PRODUCING ENERGY BY SALINITY GRADIENT THROUGH A MEMBRANE BASED ON CROSSLINKED CELLULOSE FIBRES

(30) Priorité: 20.05.2020 FR 2005211
(43) Date de publication de la demande: 29.03.2023
(73) Titulaire: Sweetch Energy, 35760 Saint-Grégoire (FR)
(72) Inventeur: MOTTET, Bruno, 56520 GUIDEL (FR); LABORIE, Benoit, 35200 RENNES (FR); KECHADI, Mohammed, 35000 RENNES (FR)
(74) Mandataire: Regimbeau
(86) Numéro de dépôt international: PCT/FR2021/050894
(87) Numéro de publication internationale: WO 2021/234296

(56) Documents cités:
- WU QINGYUN ET AL: "Salinity-Gradient Power Generation with Ionized Wood Membranes", vol. 10, no. 1, 7 January 2020 (2020-01-07), pages 1902590 - n/a, XP009525162, ISSN: 1614-6832, Retrieved from the Internet <URL:https://onlinelibrary.wiley.com/doi/full/10.1002/aenm.201902590> [retrieved on 20191122], DOI: 10.1002/AENM.201902590

## Description

### ETAT DE LA TECHNIQUE

La production d'énergie par gradient de salinité est une des sources d'énergie renouvelable présentant le plus gros potentiel à l'échelle de la planète.

Parmi les différentes technologies actuellement envisagées, la méthode d'électrodialyse inverse (RED de l'anglais « reverse electrodialysis ») repose sur l'utilisation de membranes dont la propriété de base est le transport sélectif d'ions selon le signe de leur charge. Un dispositif RED est typiquement constitué d'une alternance de membranes échangeuses d'ions entre lesquelles on fait circuler alternativement de l'eau salée et de l'eau douce. La circulation d'une alternance d'eau salée et d'eau douce entre ces membranes échangeuses d'ions (MEls) permet d'établir au niveau de chacune des MEI du dispositif un flux ionique. Aux extrémités de cet empilement de membranes, des électrodes viennent récolter le courant électrique généré par le flux ionique global.

Des membranes de bois ionisées utilisées en tant que membranes échangeuses d'ions dans les dispositifs de type RED sont connues (Wu et al, Advanced Energy Materials, vol.10, 1, January 17 2020).

L'un des problèmes rencontrés par les dispositifs de production d'électricité à partir d'un gradient de salinité, tels que les dispositifs RED actuels, est que ceux-ci présentent une capacité de production d'électricité très faible, en raison du fait que les membranes actuelles développent des puissances électriques par unité de surface de membrane (i.e. des puissances membranaires) de seulement quelques W/m² de membrane.

En particulier, les MEls conduisent faiblement les courants ioniques et constituent une contribution ohmique importante aux systèmes d'électrodialyse inverse. En outre, la préparation de ces membranes s'avère très coûteuse, c'est pourquoi la majeure partie des investissements de maintenance des procédés membranaires est consacrée au remplacement de ces membranes.

Une approche par rapport à ce problème est exposée dans la demande internationale publiée le 24 avril 2014 sous le numéro WO 2014/060690. Dans cette approche, il a été proposé des membranes nanoporeuses dont la surface interne des pores est recouverte de nitrure de bore ou plus généralement de mélanges des éléments bore, carbone et azote. Ces membranes nanoporeuses exploitent des phénomènes de diffusio-osmose au sein des pores et développent des puissances membranaires de l'ordre du kW/m². Plus récemment, il a également été proposé, dans la demande internationale publiée le 9 mars 2017 sous le numéro WO 2017/037213 des membranes nanoporeuses dont la surface interne des pores est recouverte d'oxyde de titane, permettant d'atteindre des puissances membranaires de l'ordre 5 kW/m². Cependant, cette approche implique l'utilisation de membranes à base de nitrure de bore ou d'oxyde de titane, dont la préparation à plus grande échelle que celle du laboratoire est complexe et extrêmement couteuse compte-tenu des matériaux nécessaires. Par ailleurs, les matériaux utilisés dans ces membranes sont potentiellement nocifs, et présentent un risque s'ils sont relargués dans l'environnement.

Il existe donc, au regard de ce qui précède, un besoin pour un dispositif permettant la production d'énergie électrique non polluant, économique et qui permet d'obtenir une production d'énergie par mètre carré de membrane qui soit de l'ordre du kW/m².

### EXPOSE DE L'INVENTION

Les inventeurs ont découvert qu'un dispositif de production d'énergie électrique à partir d'un gradient de salinité comportant une membrane comprenant une couche formée d'un réseau de nanofibres et/ou de microfibres de cellulose permet d'obtenir une production d'énergie par mètre carré de membrane qui soit de l'ordre du kW/m².

L'utilisation de telles membranes permet également de faciliter le développement à plus grande échelle d'un dispositif de production d'énergie par gradient de salinité et d'en réduire le coût.

Ainsi, un but de l'invention est de fournir un dispositif de production d'énergie par gradient de salinité capable de développer une puissance membranaire élevée, et utilisant des membranes économiques et faciles à préparer, qui présente de surcroit un risque limité pour l'environnement.

### Dispositif

L'invention a pour premier objet un dispositif pour la production d'énergie électrique comprenant :
- un premier réservoir A (20A) destiné à recevoir une solution électrolytique (22A) de concentration C_{A} en un soluté et comprenant une électrode (30A) en contact avec la solution électrolytique de concentration C_{A} ;
- un deuxième réservoir B (20B) destiné à recevoir une solution électrolytique (22B) de concentration C_{B} en un même soluté, C_{B} étant inférieure à C_{A}, et comprenant une électrode (30B) en contact avec la solution électrolytique de concentration C_{B} ;
- une membrane (10) séparant les deux réservoirs, ladite membrane comprenant des pores permettant la diffusion des électrolytes du réservoir A vers le réservoir B à travers le ou lesdits pores ; et
- un dispositif (32) permettant de fournir l'énergie électrique générée par le différentiel de potentiel existant entre les deux électrodes,
caractérisé en ce que la membrane comprend au moins une couche formée d'un matériau cellulosique comprenant un réseau de nanofibres et/ou de microfibres réticulées de cellulose.

Le dispositif de production d'énergie électrique selon la présente invention comprend deux réservoirs, respectivement réservoir A (20A) et réservoir B (20B), séparés par une membrane 10. Chacun des deux réservoirs A et B sont destinés à recevoir des solutions électrolytiques (22A, 22B) de concentrations respectives C_{A} et C_{B} en un même soluté, dans laquelle trempe une électrode 30A et 30B. Les deux électrodes (30A, 30B) sont reliées à un dispositif permettant de capter puis fournir l'énergie électrique générée.

Afin de générer un flux d'ions à travers la membrane, les concentrations C_{A} et C_{B} en un même soluté des solutions électrolytiques (22A, 22B) sont nécessairement différentes.

Dans le cadre de la présente invention, on considèrera arbitrairement que C_{B} est inférieure à C_{A}, ce qui entraine une circulation des ions du soluté du réservoir A vers le réservoir B.

La membrane (10), séparant les deux réservoirs A et B comprend des pores permettant la diffusion des électrolytes du réservoir A vers le réservoir B à travers le ou lesdits pores ; La diffusion se fera du réservoir A au réservoir B. Les pores ont une section moyenne permettant de laisser circuler tant les molécules d'eau que les ions du soluté.

L'épaisseur de la membrane est avantageusement comprise entre 2 µm et 100 µm, de préférence entre 2 µm et 75 µm.

La membrane comprend avantageusement de 10 à 20 g de matériau cellulosique par m² de membrane, de préférence 15 à 20 g de matériau cellulosique par m² de membrane.

Les électrodes (30A, 30B) peuvent être partiellement ou entièrement plongées dans les solutions électrolytiques (22A, 22B). Il est également possible de prévoir que les électrodes se présentent sous la forme d'au moins une partie d'une paroi des réservoirs.

Le dispositif (32) permet de capter puis fournir l'énergie électrique spontanément générée par le différentiel de potentiel existant entre les deux électrodes (30A) et (30B). Il peut être constitué de simples câbles reliant une batterie, une ampoule ou toute autre forme de consommateur électrique.

Dans le dispositif selon l'invention, l'énergie électrique est générée grâce à la différence des concentrations C_{A} et C_{B} en un même soluté des solutions électrolytiques qui provoque la mobilité des électrolytes, plus particulièrement des ions issus desdits électrolytes, de la solution la plus concentrée vers la solution la moins concentrée, à travers la porosité du ou des matériaux de la membrane et sous l'influence de leurs propriétés de surface, en particulier de leur charge de surface.

Les inventeurs ont découvert que, de manière totalement inattendue, une membrane à base de nanofibres et/ou de cellulose développe une puissance membranaire très élevée, de l'ordre de plusieurs centaines de W/m² de membrane, sous l'effet d'un gradient de salinité.

Sans vouloir être liés par une théorie particulière, les inventeurs pensent que cette puissance membranaire inattendue est déterminée par la charge de surface des nanofibres et/ou de cellulose, ainsi que par la géométrie du réseau qu'elles forment, qui permettent une très bonne conduction sélective des ions à travers la membrane.

En particulier, toujours selon les inventeurs, la porosité et la charge de surface de charge au sein du réseau de nanofibres et/ou de microfibres de cellulose influent de manière inattendue sur le passage sélectif des ions à travers la membrane, permettant ainsi à la membrane de développer une puissance membranaire inattendue.

La densité de charge de surface de la paroi interne des pores de la membrane est avantageusement comprise entre 0,001 et 3 C/m², de préférence est comprise entre 0,1 et 1 C/m².

La densité de charge de surface de la membrane peut être mesurée par dosimétrie.

### Nanofibres et/ou microfibres de cellulose

Selon l'invention, le terme « réticulées », relatif aux nanofibres et/ou aux microfibres de cellulose, signifie que lesdites fibres sont connectées entre elles par des liaisons chimiques covalentes (parfois appelées « ponts ») de sorte à former un réseau tridimensionnel sous forme de matrice cellulosique. En d'autres termes, elles ne sont pas simplement agglomérées par ou auto-assemblées par l'intermédiaire de liaisons faibles.

Les liaisons chimiques covalentes impliquées dans la réticulation des nanofibres et/ou des microfibres de cellulose peuvent également porter des groupes chargés et/ou qui deviennent chargés en présence d'eau, comme c'est par exemple le cas lorsque l'agent de réticulation utilisé est le citrate. Dans ce cas, les liaisons chimiques de réticulation jouent à la fois un rôle dans la structure et dans la charge de surface électrique des couches externes (101,103).

Le réseau de nanofibres et/ou de microfibres de cellulose présente avantageusement des pores de diamètre compris entre 10 et 1000 nm.

Selon l'invention, l'expression « nanofibre » de cellulose désigne un objet à 3 dimensions et à base de cellulose dans lequel 2 des 3 dimensions externes se situent à l'échelle nanométrique (i.e. 2 des 3 dimensions vont dans une gamme allant de 1 à 100 nm), la 3^{ème} dimension externe étant significativement supérieure à celle des deux autres dimensions, et n'étant pas nécessairement à l'échelle nanométrique.

Les nanofibres de cellulose présentent avantageusement un diamètre allant de 1 à 100 nm, de préférence allant de 1 à 70 nm, et de préférence encore allant de 4 à 30 nm, notamment de 4 à 20 nm. En outre, leur longueur est avantageusement comprise entre 0,5 et 100 µm, en particulier entre 0,5 et 50 µm, par exemple entre 0,5 et 10 µm, par exemple encore entre 0,5 et 2 µm.

Selon l'invention, l'expression « microfibre » de cellulose désigne un objet à 3 dimensions dans lequel 2 des 3 dimensions externes se situent à l'échelle micrométrique (i.e. 2 des 3 dimensions vont dans une gamme allant de 0,1 à 1 µm), la 3^{ème} dimension externe étant significativement supérieure à celle des deux autres dimensions.

Les microfibres de cellulose présentent avantageusement un diamètre allant de 100 à 1000 nm, de préférence allant de 100 à 700 nm, et de préférence encore allant de 100 à 200 nm. En outre, leur longueur est avantageusement comprise entre 0,5 et 100 µm, en particulier entre 1 et 50 µm, par exemple entre 1 et 10 µm, par exemple encore entre 1 et 5 µm.

Les nanofibres et/ou les microfibres de cellulose présentent avantageusement un facteur de forme avantageusement supérieur à 30, de préférence supérieur à 100.

Avantageusement, le matériau cellulosique comprend au moins 90 % en masse de nanofibres et/ou de microfibres de cellulose, au moins 95 % en masse de nanofibres et/ou de microfibres de cellulose, de préférence encore au moins 99 % de nanofibres et/ou de microfibres de cellulose, par rapport à la masse de matériau cellulosique.

Les nanofibres et/ou les microfibres de cellulose peuvent être obtenues par des techniques connues de l'homme du métier, notamment par traitement mécanique, enzymatique ou chimique d'un matériau lignocellulosique d'origine naturelle tel que le bois.

Dans le cas du bois, ces traitements ont notamment pour effet de séparer la cellulose des autres constituants du bois tels que la lignine et l'hémicellulose. Pour cela, les fibres de cellulose naturelles sont pré-ou post- traitées chimiquement, notamment avec des enzymes, et/ou mécaniquement pour initier la déstructuration avant traitement mécanique dans un homogénéiseur. Il est connu que l'on peut moduler la taille et en particulier le diamètre des fibres de cellulose dudit matériau en fonction du traitement que l'on fait subir à la source de cellulose naturelle.

Ainsi, les nanofibres et/ou les microfibres de cellulose peuvent être obtenues par traitement mécanique de fibres de bois, le traitement mécanique étant mené de sorte à fournir une énergie mécanique suffisante pour faire éclater les fibres de la cellulose naturelle en détruisant au moins en partie liaisons hydrogènes qui maintiennent les microfibrilles entre elles. Le traitement mécanique est souvent précédé d'une étape de traitement chimique ou enzymatique. Par exemple, cette étape de traitement peut être un traitement d'oxydation, notamment à l'aide d'un oxydant tel que le TEMPO (2,2,6,6-tétraméthylpipéridin-1-yl)oxy). Le produit ainsi obtenu est souvent désigné en français sous l'appellation « nanocellulose », et en anglais sous les appellations « nanofibrillated Cellulose » (abrégé « NFC »), « cellulose nanofibers » (abrégé « CNF ») ou « microfibrillated Cellulose » (abrégé « MFC ») dans la littérature.

En général, les matériaux MFC sont préparés à partir d'un traitement mécanique et/ou chimique moins poussé que celui utilisé pour obtenir des NFC, et présentent généralement des fibres de diamètres supérieur à ceux observés dans les NFC. Cependant, il n'existe pas de définition univoque de MFC et NFC/CNF, si bien que ces termes sont souvent utilisés de manière interchangeable dans la littérature.

Les nanofibres et/ou les microfibres de cellulose sont préférablement des nanofibres et/ ou des microfibres de nanocellulose.

Le matériau cellulosique peut notamment comprendre au plus 5 % en masse d'hémicellulose, de préférence encore au plus 3 % en masse d'hémicellulose, ou encore au plus 1% en masse d'hémicellulose.

Le matériau cellulosique peut notamment comprendre au plus 5 % en masse de lignine, de préférence encore au plus 3 % en masse de lignine, ou encore au plus 1 % en masse de lignine.

Les nanofibres et/ou les microfibres de cellulose de l'invention portent intrinsèquement une charge de surface négative du fait que les monomères de cellulose portent naturellement des groupes alcools au niveau de leurs atomes carbone C2, C3 ou C6.

Dans un mode de réalisation, la charge de surface négative intrinsèque des nanofibres et/ou microfibres de cellulose de l'invention peut être augmentée en les fonctionnalisant avec des groupes chargés négativement et/ou qui deviennent chargés négativement en présence d'eau. Ce mode de réalisation est particulièrement avantageux lorsque les groupes chargés et/ou qui deviennent chargés en présence d'eau des nanoparticules fonctionnalisées de la couche interne (102) sont de signe négatif. En effet, ceci présente l'avantage d'augmenter la charge de surface de l'ensemble de la membrane composite de l'invention.

Les groupes chargés et/ou qui deviennent chargés en présence d'eau portés par les microfibres et/ou les nanofibres sont avantageusement liés chimiquement de façon covalente à la surface desdites microfibres et/ou nanofibres de cellulose.

Tout groupe chargé et/ou qui devient chargé en présence d'eau en ce dernier connu de l'homme du métier et permettant d'augmenter la densité de charge des microfibres et/ou les nanofibres de cellulose de l'invention est utilisable dans le cadre de la présente invention.

Avantageusement, les groupes chargés et/ou qui deviennent chargés en présence d'eau de charge négative portés par les nanofibres et/ou les microfibres de cellulose sont choisis parmi le groupe sulfonate -SO₃⁻, le groupe carboxylate -CO₂⁻, le groupe carboxyalkyl R-CO₂⁻ avec R un alkyle en C1-C4 et de préférence en C1, le groupe aminodiacétate -N(CH₂CO₂⁻)₂, le groupe phosphonate PO₃²⁻ ; le groupe amidoxine -C(=NH₂)(NOH), le groupe aminophosphonate -CH₂-NH-CH₂-PO₃²⁻, le groupe thiol -SH, et leurs mélanges.

Le groupe carboxylate -CO₂⁻ et le groupe carboxyalkyl R-CO₂⁻ avec R un alkyle en C1-C4 et de préférence en C1 sont préférés.

Ainsi, des nanofibres et/ou des microfibres de cellulose portant des groupes carboxylates -CO₂⁻ (i.e. des nanofibres et/ou des microfibres de cellulose oxydée) peuvent par exemple être obtenues par oxydation, par exemple par oxydation TEMPO, de nanofibres et/microfibres de cellulose. L'oxydation se produit de préférence sur le groupe alcool primaire porté par l'atome de carbone C6 des monomères des nanofibres et/ou des microfibres de cellulose.

Des nanofibres et/ou des microfibres de cellulose portant des groupes carboxyalkylates R-CO₂⁻ (*i.e.* des nanofibres et/ou microfibres de cellulose carboxylalkylée) peuvent par exemple être obtenues par éthérification de nanofibres et/microfibres de cellulose. L'éthérification se produit de préférence sur les groupes alcools porté par les atomes de carbone C2, C3 ou C6 de monomères des nanofibres et/microfibres de cellulose.

Dans un autre mode réalisation, la charge de surface négative intrinsèque des nanofibres et/ou microfibres de cellulose de l'invention peut être inversée en les fonctionnalisant avec des groupes chargés et/ou qui deviennent chargés en présence d'eau présentant une charge électrique positive.

Ce mode de réalisation est préféré lorsque les groupes chargés et/ou qui deviennent chargés en présence d'eau des nanoparticules fonctionnalisées de la couche interne (102) sont de signe positif.

Tout groupe chargés et/ou qui devient chargés en présence d'eau connu de l'homme du métier et permettant de conférer une charge de surface positive à des nanofibres et/ou microfibres de cellulose est utilisable dans le cadre de la présente invention.

Avantageusement, les groupes positivement chargés et/ou qui deviennent positivement chargés en présence d'eau sont choisis parmi le groupe ammonium quaternaire -N(R)₃⁺ avec R un alkyl en C1-C4, le groupe ammonium tertiaire -N(H)R)₂⁺ avec R un alkyl en C1-C4, de préférence un alkyl en C1, le groupe diméthylhydroxyéthylammonium -N(C₂H₄OH)CH₃)₂⁺, et leurs mélanges.

Les groupes ammonium quaternaire sont préférés.

### Membrane monocouche

Dans un premier mode de réalisation, l'invention concerne un dispositif selon l'invention dont la membrane comporte une unique couche (101) formée d'un matériau cellulosique tel que défini ci-dessus.

Les inventeurs ont montré que, de manière surprenante, une membrane comprenant une unique couche (101) formée d'un réseau de nanofibres et/ou de microfibres de cellulose réticulée permet de développer des puissances membranaires étonnamment élevées par rapport à aux membranes de l'art antérieur, et compatibles avec une exploitation industrielle.

L'épaisseur de la membrane comprenant une unique couche (101) est avantageusement comprise entre 2 µm et 50 µm, de préférence entre 5 µm et 20 µm, de préférence encore entre 10 µm et 20 µm.

Dans l'invention, l'épaisseur de la membrane et des différentes couches est mesurée par microscopie électronique à balayage de sections de membrane sèche.

### Procédé de préparation d'une membrane monocouche

Une membrane comprenant une unique couche peut facilement être préparée par un procédé comprenant les étapes consistant à :
i) filtrer une solution comprenant des nanofibres et/ou de microfibres de cellulose sur un support de filtration de manière à former une couche comprenant des nanofibres et/ou de microfibres ;
ii) filtrer une solution de réticulation apte à réticuler les nanofibres et/ou les microfibres de cellulose de la couche obtenue à l'étape i) ;
iii) sécher le produit de l'étape ii), de préférence dans un four ;
iv) retirer le support de filtration, de sorte à obtenir une membrane comprenant une couche.

Le procédé est simple, facile à mettre en œuvre, économique et permet de contrôler l'épaisseur de chacune des couches de la membrane composite.

Les nanofibres et/ou les microfibres de cellulose utilisées dans le procédé sont telles que définies dans le premier objet de l'invention.

La filtration des étapes i) et ii) est avantageusement conduite avec une pompe à vide, de préférence sous 1 bar de dépression.

La solution de nanofibres et/ou de microfibres de cellulose comprend de 0,1 % à 1 % en poids de nanofibres et/ou de microfibres de cellulose, de préférence de 0,3 % à 0,6 % en poids de nanofibres et/ou de microfibres de cellulose.

Les nanofibres et/ou les microfibres de la solution de l'étape i) peuvent être fonctionnalisées, tel que détaillé au premier objet de l'invention.

La solution de réticulation mise en œuvre à l'étape ii) comprend avantageusement de 0,005 M à 0,02 M d'un ou plusieurs agents de réticulation, de préférence de 0,008 M à 0,012 M d'un ou plusieurs agents de réticulation.

Comme détaillé ci-dessus, l'agent de réticulation porte préférentiellement des groupes chargés et/ou qui deviennent chargés en présence d'eau.

Toute autre technique connue de l'homme du métier est envisageable, que ce soit en discontinu (i.e. par batch), ou en continu par exemple par la technique dite de « rouleau à rouleau » (« *roll-to-roll processing* » en anglais) dans laquelle la membrane est produite en continu puis stockée sous forme de rouleau.

### Membrane composite

Dans un second mode de réalisation, le dispositif comporte une membrane composite comprenant deux couches externes (101,103) chacune formées d'un matériau cellulosique tel que défini ci-dessus, entre lesquelles est disposée une couche interne (102) formée d'un second matériau comprenant des nanoparticules fonctionnalisées par des groupes chargés et/ou qui deviennent chargés en présence d'eau.

Le second matériau présente avantageusement des pores de diamètre compris entre 10 et 100 nm.

Les inventeurs ont découvert que, de manière inattendue, une telle membrane composite développe une puissance membranaire significativement encore plus élevée que celle d'une membrane comprenant une unique couche (101) telle que définie ci-dessus.

Sans vouloir être liés par une théorie particulière, les inventeurs pensent que cette amélioration de la puissance membranaire est due à un effet de synergie entre d'une part, les propriétés du réseau de nanofibres et/ou de microfibres de cellulose, et d'autres part celles de la couche de nanoparticules fonctionnalisées par des groupes chargés. L'épaisseur de la membrane composite est avantageusement comprise préférence entre 4 µm et 100 µm, de préférence encore entre 4 µm et 75 µm.

L'épaisseur de chacune des couches externes (101,103) est avantageusement comprise entre 2 µm et 45 µm, de préférence entre 2 µm et 30 µm. Lesdites couches externes présentent avantageusement la même épaisseur. L'épaisseur de la couche interne (102) est quant à elle avantageusement comprise entre 10 nm et 2 µm, 10 nm et 1 µm, 10 nm et 800 nm, de préférence entre 10 nm et 400 nm, de préférence entre 200 nm et 500 nm.

De manière préférée, l'épaisseur de chacune des couches externes (101,103) est avantageusement comprise entre 2 µm et 25 µm, et l'épaisseur de la couche interne (102) est comprise entre 10 nm et 2 µm.

Selon les inventeurs, la très faible épaisseur de la couche interne (102) permet d'obtenir une excellente perméabilité tout en augmentant la conduction sélective d'ions de manière significative.

De manière préférée, la membrane comprend moins de 10 % en poids de second matériau par rapport au poids de matériau cellulosique, de préférence entre 2 % et 8 % en poids de second matériau par rapport au poids en matériau cellulosique, de préférence encore entre 3 % et 5 % en poids de second matériau par rapport au poids de premier matériau.

Dans ce mode de réalisation, le matériau cellulosique des couches externes (101,103) assure l'intégrité de la couche interne (102), notamment lorsque lors de son utilisation, celle-ci est soumise à une contrainte tel qu'un gradient de pression de part et d'autre de la membrane.

De manière préférée, les nanofibres et/ou les microfibres des couches externes (101,103) portent des groupes chargés ou qui deviennent chargés en présence d'eau, lesdits groupes présentant avantageusement une charge de même signe que celui des groupes chargés ou qui deviennent chargés en présence d'eau des nanoparticules fonctionnalisées de la couche interne (102).

Ceci présente l'avantage d'augmenter la charge de surface de l'ensemble de la membrane.

Selon les inventeurs, la présence de ces groupes chargés ou qui deviennent chargés en présence d'eau de même signe au sein de la couche interne (102) et des couches externes (101,103) de la membrane permettent d'obtenir un effet synergique, à savoir une amélioration inattendue de la conduction sélective d'ions à travers la membrane.

Dans ce mode de réalisation, le matériau cellulosique joue donc un rôle dans la structure de la membrane et dans sa capacité à assurer une conduction sélective d'ions.

Par ailleurs, les liaisons chimiques covalentes impliquées dans la réticulation des nanofibres et/ou des microfibres peuvent également porter des groupes chargés et/ou qui deviennent chargés en présence d'eau, comme c'est par exemple le cas lorsque l'agent de réticulation utilisé est le citrate. Dans ce cas, les liaisons chimiques de réticulation jouent à la fois un rôle dans la structure et dans la charge de surface électrique des couches externes (101,103).

### Nanoparticules fonctionnalisées

Selon l'invention, le terme « nanoparticule » désigne un objet à 3 dimensions, dans lequel au moins une dimension externe se situe à l'échelle nanométrique (i.e. au moins une dimension est dans une gamme comprise entre 1 à 100 nm).

Le second matériau comprend avantageusement les nanoparticules sous la forme de nanoparticules individuelles, c'est-à-dire de nanoparticules qui ne sont pas agrégées ou autrement dit liées de manière covalentes entre elles.

Le second matériau comprend avantageusement au moins 50 % en masse de nanoparticules, au moins 95 % en masse de nanoparticules, de préférence encore au moins 99 % de nanoparticules, par rapport à la masse de second matériau.

Avantageusement, les nanoparticules ne sont pas sous forme de nanotubes.

Les nanoparticules sont préférentiellement des nanoparticules lamellaires.

Selon l'invention, le terme « nanoparticule lamellaire » désigne une nanoparticule comprenant des atomes sous la forme de monocouches d'atomes liées entres eux par des liaisons covalentes. Les nanoparticules lamellaires peuvent être constitué d'une unique monocouche d'atomes (matériaux 2D) ou d'un empilement de 2 à 5 monocouches d'atomes liées entre elles par des liaisons faibles, telles que des forces de Van der Waals.

Autrement dit, une nanoparticule lamellaire est un objet à 3 dimensions dans lequel une première dimension externe se situe à l'échelle nanométrique et les deux autres dimensions sont significativement supérieures à la première dimension, et varient notamment entre l'échelle nanométrique et l'échelle micrométrique.

Les nanoparticules lamellaires présentent de préférence une taille médiane (également désigné sous l'acronyme « D50 ») compris entre 5 µm et 50 µm, de préférence compris entre 10 µm et 20 µm, de préférence encore de 15 µm.

Selon l'invention, les termes « monocouche », « bicouche », « oligo-couches », relatifs aux nanoparticules lamellaires, désignent une nanoparticules lamellaire constituée respectivement d'une monocouche d'atomes, deux monocouches d'atomes, et de 3 à 5 monocouches d'atomes. Les nanoparticules lamellaires bicouches et oligocouches sont typiquement stabilisées par des interactions faibles entre les monocouches d'atomes, telles que des interactions de Van der Waals.

Les nanoparticules lamellaires sont préférentiellement des nanoparticules lamellaires d'un oxyde métallique, notamment de SnO₂ ou de TiO₂, des nanoparticules lamellaires de d'un dichalcogénure d'un métal de transition tel que le disulfure de molybdène MoS₂, des nanoparticules lamellaires de carbone, ou un mélange de ceux-ci.

Les nanoparticules lamellaires de carbone sont avantageusement des nanoparticules lamellaires de graphène monocouche, de graphène bicouche, de graphène oligo-couches ou un mélange de ceux-ci.

Les nanoparticules particules de graphène monocouches sont préférées.

Selon l'invention, le graphène monocouche est un matériau bidimensionnel cristallin constitué de carbone sous une forme allotropique particulière, qui peut être représentée comme un nid d'abeille planaire. Plus particulièrement, le graphène monocouche est un feuillet constitué par un unique plan atomique de carbone hybridé sp². Il peut donc être qualifié de monocouche.

Selon l'invention, le graphène bicouche (ou BLG ; « Bi-Layer Graphene » en anglais) est un matériau constitué d'un empilement de 2 monocouches de graphène stabilisé par des interactions de type van der Waals entre les 2 monocouches de graphène. Le BLG peut être obtenu par exfoliation du graphite ou par dépôt chimique en phase vapeur (CVD).

Selon l'invention, le « graphène oligo-couches » (ou FLG : « Few-Layer Graphene » en anglais) est un matériau constitué d'un empilement de 3 à 5 feuillets de graphène, stabilisé par des interactions de type van der Waals entre les différents plans de graphène.

Les nanoparticules lamellaires de carbone sont avantageusement des nanoparticules lamellaires de disulfure de molybdène monocouche, de disulfure de molybdène bicouche, de disulfure de molybdène oligo-couches ou un mélange de ceux-ci.

Selon le signe de leur charge, les groupes chargés ou qui deviennent chargés en présence d'eau confèrent une charge de surface négative ou positive à la couche interne (102) de la membrane composite lorsqu'elle est mise en présence d'eau.

Tout groupe chargé ou qui devient chargé en présence d'eau connu de l'homme du métier et permettant d'augmenter la charge de surface de particules de graphène est utilisable dans le cadre de la présente invention.

Dans un mode de réalisation, les nanoparticules sont fonctionnalisées en surface par des groupes chargés négativement et/ou qui deviennent chargés négativement en présence d'eau.

Les groupes chargés négativement et/ou qui deviennent chargés négativement en présence d'eau sont avantageusement choisis parmi le groupe époxyde, le groupe hydroxyle, le groupe carbonyle, le groupe carboxyle, le groupe sulfonate -SO₃⁻, le groupe carboxyalkylate R-CO₂⁻ avec R un alkyle en C1-C4 et de préférence en C1, le groupe aminodiacétate -N(CH₂CO₂⁻)₂, le groupe phosphonate PO₃²⁻ ; le groupe amidoxine -C(=NH₂)(NOH), le groupe aminophosphonate -CH₂-NH-CH₂-PO₃²⁻, le groupe thiol -SH, et leurs mélanges.

De manière préférée, les nanoparticules fonctionnalisées en surface par des groupes chargés négativement ou qui deviennent chargés négativement en présence d'eau sont des nanoparticules lamellaires d'oxyde de graphène (ou GO, en anglais « graphene oxyde »).

Les nanoparticules lamellaires d'oxyde de graphène portent des groupes chargés négativement ou qui deviennent chargés négativement en présence d'eau, avantageusement choisis parmi le groupe époxyde, le groupe hydroxyle, le groupe carbonyle, le groupe carboxyle, et leurs mélanges.

Dans un mode de réalisation, les nanoparticules sont fonctionnalisées en surface par des groupes chargés positivement et/ou qui deviennent chargés positivement en présence d'eau.

Avantageusement, les groupes chargés positivement et/ou qui deviennent chargés positivement en présence d'eau sont choisis parmi le groupe ammonium quaternaire -N(R)₃⁺ avec R un alkyl en C1-C4, le groupe ammonium tertiaire -N(H)R)₂⁺ avec R un alkyl en C1-C4, de préférence un alkyl en C1, le groupe diméthylhydroxyéthylammonium -N(C₂H₄OH)CH₃)₂⁺, et leurs mélanges.

### Procédé de préparation d'une membrane composite

La membrane composite conforme au deuxième mode de réalisation peut être préparée par un procédé comprenant les étapes consistant à :
i) filtrer une solution comprenant des nanofibres et/ou des microfibres de cellulose sur un support de filtration de manière à former une première couche externe (101) comprenant des nanofibres et/ou des microfibres de cellulose ;
ii) filtrer une solution de particules de nanoparticules fonctionnalisées sur la couche externe (101) obtenue à l'issue de l'étape i) de sorte à former une couche interne (102) sur ladite première couche externe (101) ;
iii) filtrer une solution de nanofibres et/ou de microfibres de cellulose de manière à former une deuxième couche externe (103) comprenant des nanofibres et/ou des microfibres sur la couche interne (102) obtenue à l'issue de l'étape ii) ;
iv) filtrer une solution de réticulation apte à réticuler les nanofibres et/ou les microfibres de cellulose des couches externes (101,103) ;
v) sécher le produit de l'étape iv) au four ;
vi) retirer le support de filtration, de sorte à obtenir une membrane composite.

Les nanofibres et/ou les microfibres de cellulose et les nanoparticules fonctionnalisées en surface par des groupes chargés et/ou qui deviennent chargés en présence d'eau sont telles que définies dans le premier objet de l'invention.

Le procédé est simple, facile à mettre en œuvre, économique et permet de contrôler l'épaisseur de chacune des couches de la membrane composite.

La filtration des étapes i), ii), iii) et iv) est avantageusement conduite avec une pompe à vide, de préférence sous 1 bar de dépression.

La filtration de l'étape i) peut optionnellement être suivie d'une étape i₁) consistant à filtrer une solution de réticulation sur la couche externe obtenue à l'issue de l'étape i).

La filtration de l'étape ii) peut optionnellement être suivie d'une étape ii₁) consistant à filtrer une solution de réticulation sur la couche interne (102) obtenue à l'issue de l'étape ii).

La solution de nanofibres et/ou de microfibres mise en œuvre aux étapes i) et iii) comprend de 0,1% à 1% en poids de nanofibres et/ou de microfibres de cellulose, de préférence de 0,3% à 0,6% en poids de nanofibres et/ou de microfibres de cellulose.

Les nanofibres et/ou les microfibres de la solution des étapes i) et iii) peuvent être fonctionnalisées, tel que détaillé au premier objet de l'invention.

La solution de nanoparticules fonctionnalisées mise en œuvre à l'étape ii) comprend de 0,001 % à 0,01 % en poids de nanoparticules, de préférence de 0,003 % à 0,006 % en poids de nanoparticules fonctionnalisées.

La solution de réticulation mise en œuvre à l'étape iv) comprend avantageusement de 0,005 M à 0,02 M d'un ou plusieurs agents de réticulation, de préférence de 0,008 M à 0,012 M d'un ou plusieurs agents de réticulation.

Le séchage de l'étape v) est avantageusement réalisé à une température permettant à la réaction de réticulation de se produire et inférieure à une température endommageant les fibres et/ou les nanofibres. De préférence, le séchage est réalisé à une température comprise entre 80°C et 150°C, notamment entre 80°C et 120°C, de préférence encore comprise entre 80°C et 100°C.

Comme détaillé ci-dessus, l'agent de réticulation porte préférentiellement des groupes chargés et/ou qui deviennent chargés en présence d'eau.

Toute autre technique connue de l'homme du métier est envisageable, que ce soit en discontinu (i.e. par batch), ou en continu par exemple par la technique dite de « rouleau à rouleau » (« *roll-to-roll processing* » en anglais) dans laquelle la membrane est produite en continu puis stockée sous forme de rouleau.

### Autres composants du dispositif

Les réservoirs A et B du dispositif selon l'invention contiennent chacun une solution électrolytique (22A, 22B) de concentration respective C_{A} et C_{B} en un même soluté, C_{B} étant inférieure à C_{A}.

Chaque réservoir A et B peut être tout dispositif ou environnement naturel, ouvert ou fermé, pouvant contenir un liquide.

En disposant dans les deux réservoirs A et B des solutions électrolytiques de concentrations différentes, un flux osmotique est généré entre les deux réservoirs, de préférence par diffusio-osmose, c'est-à-dire sans qu'aucune pression osmotique n'apparaisse. Dans un autre mode de réalisation, le gradient de concentration pourrait également être obtenu par gradient de température entre les deux réservoirs en jouant sur la solubilité du sel en fonction de la température.

Dans le cadre de la présente invention, le ratio de concentration Rc (Rc étant égal au rapport de la concentration de la solution la plus concentrée/la concentration de la solution la moins concentrée) pourra être compris entre 1 et 10⁹. De préférence, le ratio de concentration C_{A}/C_{B} est supérieur à 1 et inférieur ou égal à 10⁹, avantageusement supérieur à 10 et inférieur ou égal à 10⁵.

Les solutions électrolytiques sont des solutions aqueuses comprenant des électrolytes. Les électrolytes pourront être de toute nature chimique dans la mesure où ils se dissolvent dans la solution sous forme d'ions chargés. Préférentiellement, ces ions proviendront de sels dissous tels que NaCl, KCl, CaCl₂ et MgCl₂. Les solutions électrolytiques peuvent être :
- des solutions synthétiques ;
- des solutions naturelles, telles que des eaux douces provenant des lacs ou des rivières, des eaux sous-terraines, des eaux saumâtres, de l'eau de mer ;
- des eaux de production industrielle, des eaux de production pétrolière ou des solutions biologiques.

De manière préférée, lesdites solutions électrolytiques sont des solutions aqueuses comprenant un soluté choisi parmi les halogénures alcalins ou les halogénures alcalino-terreux, de préférence choisi parmi NaCl, KCl, CaCl₂ et MgCl₂, de manière davantage préféré le soluté est le NaCl.

Pour améliorer le flux osmotique généré de part et d'autre de la membrane selon l'invention le pH des solutions peut être ajusté en fonction du point isoélectrique du ou des matériaux constituant la membrane.

Dans le cadre de la présente invention, on entend par pHᵢₛₒ, le pH du point isoélectrique du ou des matériaux constituant la membrane. Le pHᵢₛₒ se mesure par des méthodes connues de l'homme du métier, notamment par la méthode de titration potentiométrique acide/base.

Plus favorablement encore, pour accroître l'asymétrie du dispositif et amplifier la quantité d'énergie électrique produite par le dispositif, un gradient de pH pourra également être établi entre les deux réservoirs, la différence de pH entre les deux solutions sera supérieure à 1, préférentiellement supérieure à 2.

Chacun des réservoirs A et B du dispositif selon l'invention comprend également une électrode (30A, 30B) disposée de manière à entrer en contact avec la solution électrolytique (22A, 22B).

Différents types d'électrodes pourront être utilisés pour la récupération du potentiel ou courant électrique développé entre les deux réservoirs.

Tous types d'électrodes capables de collecter le flux de ion Na⁺ ou Cl⁻ pourront être utilisés, et de préférence les électrodes composés d'Argent et Chlorure d'Argent (Ag/AgCl), de Carbone et Platine (C/Pt-), de Carbone (C-), de Graphite ou encore de complexes de Fer du type [Fe(CN)6]⁴⁻/[Fe(CN)6]³⁻.

Les électrodes peuvent être partiellement ou entièrement plongées dans les solutions électrolytiques. Il pourrait également être prévu que les électrodes se présentent sous la forme d'au moins une partie d'une paroi des réservoirs.

Les électrodes peuvent notamment être des électrodes à circulation (en anglais « redox-flow »). Le principe de ces électrodes repose sur une réaction d'oxydation et une réaction de réduction au niveau de chacune des électrodes.

Les électrodes sont préférentiellement des électrodes capacitives ou supercapacitives. Le principe de ces électrodes repose sur une interaction des électrodes et de l'électrolyte qui entraîne l'apparition spontanée d'une accumulation de charges aux interfaces.

Ces électrodes sont reliées ensemble à un dispositif (32) permettant de capter puis fournir l'énergie électrique spontanément générée par le différentiel de potentiel existant entre elles. Ces électrodes peuvent notamment être reliées par de simples câbles reliant une batterie, une ampoule ou toute autre forme de consommateur électrique.

Le dispositif ainsi décrit permet de récolter l'énergie électrique résultant du flux ionique chargé traversant la membrane nano-fluidique.

Dans un mode particulier de l'invention, le dispositif peut comprendre N réservoirs (20) et N-1 membranes (10), N étant un nombre entier, notamment compris entre 3 et 100, en particulier compris entre 3 et 50.

Dans ce dispositif, les réservoirs et les membranes sont tels que définis ci-dessus. L'ensemble sera donc constitué d'une alternance de réservoirs contenant alternativement une solution électrolytique concentrée et une solution électrolytique moins concentrée, séparés entre eux par des membranes.

### Procédé de production d'énergie électrique

L'invention a pour deuxième objet un procédé de production d'énergie électrique utilisant un dispositif tel que décrit dans le premier objet de l'invention comprenant les étapes suivantes :
i) fournir une solution électrolytique (22A) de concentration C_{A} en soluté dans le réservoir A (20A), de manière à ce que l'électrode (30A) dont il est équipé soit en contact avec ladite solution (22A),
ii) fournir une solution électrolytique (22B) de concentration C_{B} en un même soluté, C_{B} étant inférieure à C_{A}, dans le réservoir B (20B), de manière à ce que l'électrode (30B) dont il est équipé soit en contact avec ladite solution (22B),
iii) laisser diffuser les électrolytes du réservoir A vers le réservoir B à travers le la membrane (10),
iv) capter l'énergie électrique générée par le différentiel de potentiel existant entre les deux électrodes, à l'aide du dispositif (32).

Les étapes i) et ii) sont préférentiellement mises en œuvre en fournissant la solution électrolytique de concentration C_{A} et la solution électrolytique de concentration C_{B} sous forme d'un écoulement continu.

Plus généralement, ces différentes étapes seront facilement réalisables par l'homme du métier, en utilisant ses connaissances générales.

### DESCRIPTION DES FIGURES

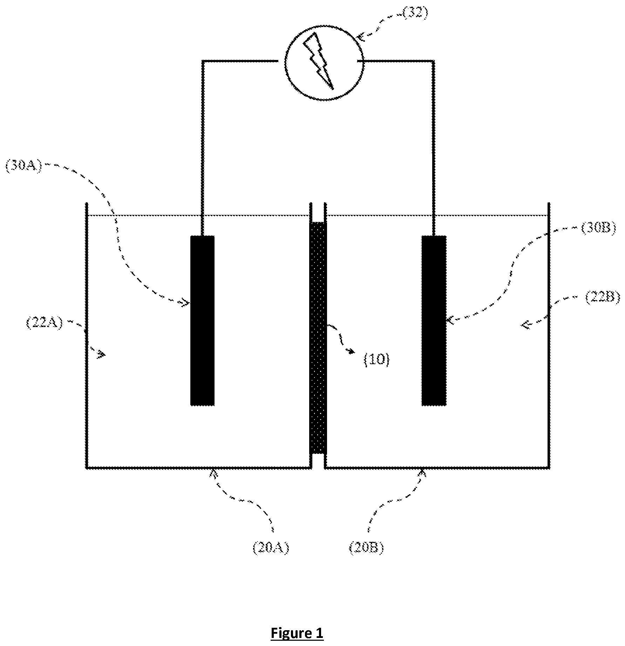

La figure 1 représente schématiquement un exemple de dispositif de production d'énergie électrique selon la présente invention, comprenant deux réservoirs 20A et 20B, respectivement réservoir A et réservoir B, séparés par une membrane 10. Chacun des deux réservoirs contient une solution électrolytique 22A et 22B de concentration respective C_{A} et C_{B} en un même soluté, dans laquelle trempe une électrode 30A et 30B. Les deux électrodes 30A et 30B sont reliées à un dispositif permettant de capter puis fournir l'énergie électrique générée. Chaque réservoir A et B peut être tout dispositif ou environnement naturel, ouvert ou fermé, pouvant contenir un liquide. Afin de générer un flux d'ions à travers la membrane, les concentrations C_{A} et C_{B} en un même soluté des solutions électrolytiques 22A et 22B sont nécessairement différentes. Dans le cadre de la présente invention, on considère arbitrairement que C_{B} est inférieure à C_{A}, ce qui entraine une circulation des ions du soluté du réservoir A vers le réservoir B. La membrane 10, séparant les deux réservoirs A et B comprend des pores permettant la diffusion des électrolytes du réservoir A vers le réservoir B à travers les pores. La diffusion se fera du réservoir A au réservoir B. Les pores ont une section moyenne permettant de laisser circuler tant les molécules d'eau que les ions du soluté. Les électrodes 30A et 30B peuvent être partiellement ou entièrement plongées dans les solutions 22A et 22B. Il est également possible de prévoir que les électrodes se présentent sous la forme d'au moins une partie d'une paroi des réservoirs. Le dispositif (32) permet de capter puis fournir l'énergie électrique spontanément générée par le différentiel de potentiel existant entre les deux électrodes 30A et 30B. Il peut être constitué de simples câbles reliant une batterie, une ampoule ou toute autre forme de consommateur électrique.

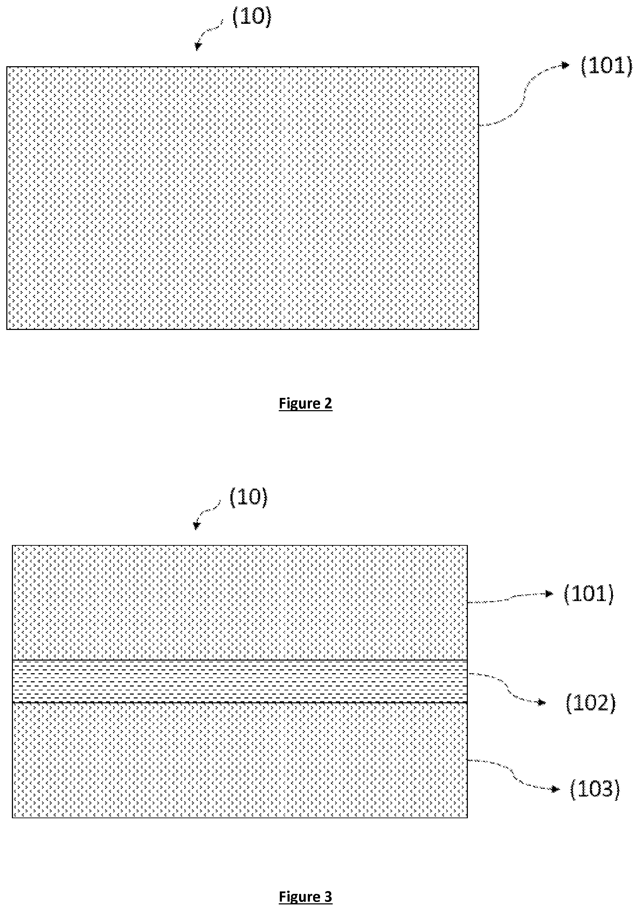

La Figure 2 représente schématiquement en coupe un exemple de membrane (10) selon l'invention comportant une unique couche (101) formée d'un matériau cellulosique comprenant des nanofibres et/ou des microfibres de cellulose réticulées.

La Figure 3 représente schématiquement en coupe un exemple de membrane (10) selon l'invention, dans lequel la membrane est une membrane composite comprenant deux couches externes (101,103) chacune formées d'un matériau cellulosique comprenant des nanofibres et/ou des microfibres de cellulose réticulées entre lesquelles est disposée une couche interne (102) formée d'un matériau comprenant des nanoparticules fonctionnalisées en surface par des groupes chargés et/ou qui deviennent chargés en présence d'eau.

### EXEMPLES

La présente invention se comprendra mieux à la lecture des exemples suivants qui illustrent non-limitativement l'invention.

### Exemple 1 : Préparation et mesure de la puissance membranaire d'une membrane monocouche

### Matériel et matières premières

Le matériel utilisé est listé ci-après :
- Un filtre Buchner
- Une pompe à vide à 1bar
- Papier filtre en PVDF 0,1 µm
- Un four étuve

Les matières premières utilisées dans cet exemple sont listées ci-après :
- Nanofibres de cellulose chargée négativement par carboxyméthylation ou oxydation TEMPO ;
- Acide citrique, 99 % en volume.

### Préparation de membranes monocouches

Le procédé de préparation mis en œuvre est comme suit :
▪ On filtre sur le filtre buchner avec un filtre en PVDF 3,5 ml de solution de nanocellulose. La pompe à vide est réglée sur 1 bar de dépression ;
▪ Une fois toute la solution filtrée on refiltre dessus 10 ml de solution d'acide citrique (qui joue le rôle d'agent de réticulation entre les nanofibres) ;
▪ Une fois toute la solution d'acide citrique filtrée stoppe la pompe, on ouvre le dispositif buchner et on prélève le papier filtre avec son filtrat.

L'ensemble papier filtre filtrat est ensuite mis au four étude à 85°C pendant 15 minutes (séchage et réaction de réticulation).

On décolle finalement la membrane de son support de filtration, pour faciliter les choses ont pourra éventuellement préalablement la tremper dans une solution isopropanol.

Les membranes ainsi obtenues sont composées de 17,5 g/m² de nanocellulose.

Ces membranes présentent une couche interne d'oxyde de graphène ayant une épaisseur d'environ 100 nm, et des couches externes de cellulose ayant chacune une épaisseur d'environ 10 µm.

### Puissance membranaire de la membrane monocouche

Les essais ont été réalisés avec un dispositif constitué de deux réservoirs indépendants contenant chacun une solution de chlorure de sodium (NaCl) dissoutes à 1M pour la solution concentrée, puis 0,1 M, 0,01 M et 0,001 M en solution diluée permettant de définir le gradient de Rc de 10, 100 et 1000 entre les deux réservoirs.

Les deux réservoirs sont séparés par une membrane composite conforme à l'invention obtenue comme détaillé dans l'Exemple 1.

Des électrodes Ag/AgCl en grille d'argent sont immergées dans chacun des réservoirs de part et d'autre de la membrane pour mesurer le courant électrique produit à travers les membranes. Les résultats sont présentés en Tableau 1.

**Tableau 1**

| Membrane NFC cellulose | | | |
|---|---|---|---|
| Gradient de concentration | 1000 | 100 | 10 |
| U (mV) | 220 | 150 | 95 |
| R (Ohm.cm²) | 0.08 | 0.08 | 0.0725 |
| I (mA) | 2750 | 1 875 | 1 310 |
| Pmax W/m² | 1513 | 703 | 311 |
| U Nernst (mV) | 140 | 90 | 45 |
| U Osmo (mV) | 80 | 60 | 150 |
| I Nernst (mA) | 1750 | 1 125 | 621 |
| I Osmo (mA) | 1000 | 750 | 690 |
| P Osmo Max (W/m²) | 200 | 113 | 86 |

Avec :
- U Osmo le potentiel lié à la membrane duquel est déduit le potentiel de Nernst des électrodes (U Nernst)
- I Osmo le courant lié à la membrane, calculé grâce à la mesure de résistance électrique de la membrane suivant la loi d'Ohm I = U/R
- P Osmo Max est calculé par la formule Pmax= (U x I)/4

Les puissances membranaires sont exprimées en W/m² en multipliant par 10 000 les valeurs obtenues sur 1 cm² de membrane.

### Exemple 2 : Préparation et mesure de la puissance membranaire d'une membrane composite

### Matériel et matières premières

Le matériel utilisé est le même que celui détaillé en Exemple 1.

Les matières premières utilisées dans cet exemple sont listées ci-après :
- Nanofibres de cellulose chargée négativement par carboxyméthylation ou oxydation TEMPO ;
- Acide citrique, 99 % en volume ;
- Oxyde de graphène commercialisé par la société Sigma Aldrich sous la référence n°777676.

### Préparation de la membrane composite

Le procédé de préparation mis en œuvre dans cet exemple est détaillé ci-après :
▪ On filtre sur le filtre buchner avec un filtre PVD 1,75 ml de solution de nanocellulose. La pompe à vide est réglée sur 1 bar de dépression ;
▪ Une fois toute la solution filtrée on refiltre dessus 5 ml de solution d'acide citrique (qui jouera le rôle d'agent de réticulation entre les nanofibres) ;
▪ Une fois l'acide citrique filtré, on filtre 7 ml de solution d'oxyde de graphène
▪ Une fois la solution de graphène oxide filtrée, on refiltre 1,75 ml de solution de nanocellulose ;
▪ Une fois toute la solution filtrée on refiltre dessus 5 ml de solution d'acide citrique (qui jouera le rôle d'agent de réticulation entre les nanofibres) ;
▪ Une fois toute la solution d'acide citrique filtrée stoppe la pompe, on ouvre le dispositif Buchner et on prélève le papier filtre avec son filtrat.

L'ensemble papier filtre/filtrat est ensuite mis au four étude à 85°C pendant 15 minutes. (séchage et réaction de réticulation).

On décolle finalement la membrane de son support de filtration, pour faciliter les choses on pourra éventuellement préalablement la tremper dans une solution isopropanol.

Les membranes ainsi obtenues sont composées de 17,5 g/m² de nanocellulose et 0,34 g/m² de graphène oxide (2 % en masse).

On a fait varier les teneurs en nanocellulose les teneurs en en masse d'oxyde de graphène. Des teneurs en nanocellulose inférieures à 10 mg/m² ne permettent pas d'obtenir des membranes ayant une tenue mécanique suffisante.

Pour des raisons de tenue mécanique et de résistance ionique ces valeurs de 17 g/m² de cellulose et 4 % en poids d'oxide de graphène semblent optimales.

### Puissance membranaire de la membrane composite

Les essais ont été réalisés avec un dispositif constitué de deux réservoirs indépendants contenant chacun une solution de chlorure de sodium (NaCl) dissoutes à 1M pour la solution concentrée, puis 0,1 M, 0,01 M et 0,001 M en solution diluée permettant de définir le gradient de Rc de 10, 100 et 1 000 entre les deux réservoirs.

Les deux réservoirs sont séparés par une membrane composite conforme à l'invention obtenue comme détaillé dans l'Exemple 1.

Des électrodes Ag/AgCl en grille d'argent sont immergées dans chacun des réservoirs de part et d'autre de la membrane pour mesurer le courant électrique produit à travers les membranes. Les résultats de ces mesures sont présentés dans le Tableau 2.

**Tableau 2**

| Membrane NFC cellulose + 2% oxyde de graphène | | | |
|---|---|---|---|
| Gradient de concentration | 1000 | 100 | 10 |
| U (mV) | 330 | 250 | 151 |
| R (Ohm.cm²) | 0.16 | 0.16 | 0.145 |
| I (mA) | 2063 | 1 563 | 1041 |
| Pmax W/m² | 1702 | 977 | 393 |
| U Nernst (mV) | 140 | 90 | 45 |
| U Osmo (mV) | 190 | 160 | 106 |
| I Nernst (mA) | 875 | 563 | 310 |
| I Osmo (mA) | 1188 | 1000 | 731 |
| P Osmo Max(W/m²) | 564 | 400 | 194 |

Avec :
- U Osmo le potentiel lié à la membrane duquel est déduit le potentiel de Nernst des électrodes (U Nernst)
- I Osmo le courant lié à la membrane, calculé grâce à la mesure de résistance électrique de la membrane suivant la loi de Ohm I = U/R
- P Osmo Max est calculé par la formule Pmax= (U x I)/4

Les puissances membranaires sont exprimées en W/m² en multipliant par 10 000 les valeurs obtenues sur 1 cm² de membrane.

Il a par ailleurs été constaté qu'en appliquant à la membrane une pression de 3 à 4 bars entre deux plaques métalliques lors du chauffage à 85°C, on améliorait la stabilité mécanique de la membrane de 10 à 20 %.

## Revendications

1. Dispositif pour la production d'énergie électrique comprenant :
a) un premier réservoir A (20A) destiné à recevoir une solution électrolytique (22A) de concentration C_{A} en un soluté et comprenant une électrode (30A) en contact avec la solution électrolytique de concentration C_{A} ;
b) un deuxième réservoir B (20B) destiné à recevoir une solution électrolytique (22B) de concentration C_{B} en un même soluté, C_{B} étant inférieure à C_{A}, et comprenant une électrode (30B) en contact avec la solution électrolytique de concentration C_{B} ;
c) une membrane (10) séparant les deux réservoirs, ladite membrane comprenant des pores permettant la diffusion des électrolytes du réservoir A vers le réservoir B à travers le ou lesdits pores ; et
d) un dispositif (32) permettant de fournir l'énergie électrique générée par le différentiel de potentiel existant entre les deux électrodes, **caractérisé en ce que** la membrane comprend au moins une couche formée d'un matériau cellulosique comprenant un réseau de nanofibres et/ou de microfibres réticulées de cellulose.

2. Dispositif selon la revendication 1, dans lequel l'épaisseur de la membrane est comprise entre 2 µm et 100 µm, de préférence entre 2 µm et 75 µm.

3. Dispositif selon l'une quelconque des revendications précédentes, dans lequel la membrane comprend de 10 à 20 g de matériau cellulosique par m² de membrane, de préférence 15 à 20 g de matériau cellulosique par m² de membrane.

4. Dispositif selon l'une quelconque des revendications précédentes, dans lequel les nanofibres et/ou les microfibres réticulées de cellulose sont fonctionnalisées par des groupes chargés négativement et/ou qui deviennent chargés négativement en présence d'eau, de préférence des groupes choisis parmi le groupe sulfonate -SO₃⁻, le groupe carboxylate -CO₂⁻, le groupe aminodiacétate -N(CH₂CO₂⁻)₂, le groupe phosphonate PO₂³⁻; le groupe amidoxine -C(=NH₂)(NOH), le groupe aminophosphonate -CH₂-NH-CH₂-PO₃²⁻, le groupe thiol -SH, et leurs mélanges.

5. Dispositif selon l'une quelconque des revendications 1 à 3, dans lequel les nanofibres et/ou les microfibres réticulées de cellulose sont fonctionnalisées par des groupes chargés positivement et/ou qui deviennent chargés positivement en présence d'eau, de préférence des groupes choisis parmi le groupe ammonium quaternaire -N(R)₃⁺ avec R un alkyl en C1-C4, le groupe ammonium tertiaire -N(H)R)₂⁺ avec R un alkyl en C1-C4, de préférence un alkyl en C1, le groupe diméthylhydroxyéthylammonium -N(C₂H₄OH)CH₃)₂⁺, et leurs mélanges.

6. Dispositif selon l'une quelconque des revendications précédentes dans lequel la membrane comprend une unique couche (101) formée d'un matériau cellulosique comprenant un réseau de nanofibres et/ou de microfibres réticulées de cellulose.

7. Dispositif selon l'une quelconque des revendications 1 à 5 dans lequel la membrane est une membrane composite comprenant deux couches externes (101,103) chacune formées d'un matériau cellulosique comprenant un réseau de nanofibres et/ou de microfibres réticulées de cellulose, entre lesquelles est disposée une couche interne (102) formée d'un second matériau comprenant des nanoparticules fonctionnalisées par des groupes chargés et/ou qui deviennent chargés en présence d'eau.

8. Dispositif selon la revendication précédente, dans lequel l'épaisseur de chacune des couches externes (101,103) est avantageusement comprise entre 2 µm et 25 µm, et l'épaisseur de la couche interne (102) est comprise entre 10 nm et 2 µm.

9. Dispositif selon l'une quelconque des revendications 7 à 8, dans lequel les nanoparticules sont des nanoparticules lamellaires, de préférence des nanoparticules lamellaires d'un oxyde métallique, d'un dichalcogénure d'un métal de transition tel que le disulfure de molybdène, de carbone, ou un mélange de ceux-ci, de préférence encore des nanoparticules lamellaires d'oxyde de graphène fonctionnalisées en surface par des groupes chargés négativement ou qui deviennent chargés négativement en présence d'eau.

10. Procédé de production d'énergie électrique utilisant un dispositif tel que décrit dans l'une quelconque des revendications précédentes, comprenant les étapes suivantes :
i) fournir une solution électrolytique (22A) de concentration C_{A} en soluté dans le réservoir A (20A), de manière à ce que l'électrode (30A) dont il est équipé soit en contact avec ladite solution (22A),
ii) fournir une solution électrolytique (22B) de concentration C_{B} en un même soluté, C_{B} étant inférieure à C_{A}, dans le réservoir B (20B), de manière à ce que l'électrode (30B) dont il est équipé soit en contact avec ladite solution (22B),
iii) laisser diffuser les électrolytes du réservoir A vers le réservoir B à travers le la membrane (10),
iv) capter l'énergie électrique générée par le différentiel de potentiel existant entre les deux électrodes, à l'aide du dispositif (32).

11. Procédé selon la revendication précédente, **caractérisé en ce que** lesdites solutions électrolytiques sont des solutions aqueuses comprenant un soluté choisi parmi les halogénures alcalins ou les halogénures alcalino-terreux, de préférence choisi parmi NaCl, KCl, CaCl₂ et MgCl₂.

12. Procédé selon l'une quelconque des revendications 10 à 11, **caractérisé en ce que** le ratio de concentration C_{A}/C_{B} est supérieur à 1 et inférieur ou égal à 10⁹, de préférence supérieur à 1 et inférieur ou égal à 10⁵.

## Patentansprüche

1. Vorrichtung zur Erzeugung elektrischer Energie, umfassend:
a) einen ersten Behälter A (20A) zur Aufnahme einer Elektrolytlösung (22A) mit einer Konzentration C_{A} eines gelösten Stoffes und umfassend eine Elektrode (30A) im Kontakt mit der Elektrolytlösung mit der Konzentration C_{A};
b) einen zweiten Behälter B (20B) zur Aufnahme einer Elektrolytlösung (22B) mit einer Konzentration C_{B} desselben gelösten Stoffes, wobei C_{B} kleiner als C_{A} ist, und umfassend eine Elektrode (30B) im Kontakt mit der Elektrolytlösung mit der Konzentration C_{B};
c) eine Membran (10), die die beiden Behälter trennt, wobei die Membran Poren aufweist, die die Diffusion der Elektrolyte vom Behälter A zum Behälter B durch die Pore/n gestatten; und
d) eine Vorrichtung (32) zum Bereitstellen der elektrischen Energie, die durch die zwischen den beiden Elektroden bestehende Potentialdifferenz erzeugt wird, **dadurch gekennzeichnet, dass** die Membran mindestens eine Schicht aus einem Zellulosematerial umfasst, das ein Netzwerk aus vernetzten Nanofasern und/oder Mikrofasern aus Zellulose umfasst.

2. Vorrichtung nach Anspruch 1, wobei die Dicke der Membran zwischen 2 µm und 100 µm, vorzugsweise zwischen 2 µm und 75 µm, liegt.

3. Vorrichtung nach einem der vorstehenden Ansprüche, wobei die Membran 10 bis 20 g Zellulosematerial pro m² Membran, vorzugsweise 15 bis 20 g Zellulosematerial pro m² Membran, umfasst.

4. Vorrichtung nach einem der vorstehenden Ansprüche, wobei die vernetzten Nanofasern und/oder Mikrofasern aus Zellulose durch negativ geladene Gruppen und/oder Gruppen, die in Gegenwart von Wasser negativ geladen werden, funktionalisiert sind, vorzugsweise durch Gruppen, die aus der Sulfonatgruppe -SO₃⁻, der Carboxylatgruppe -CO₂⁻, der Aminodiacetatgruppe - N (CH₂CO₂⁻)₂, der Phosphonatgruppe PO₂³⁻; der Amidoxingruppe -C(=NH₂)(NOH), der Aminophosphonatgruppe -CH₂-NH-CH₂-PO₃²⁻, der Thiolgruppe -SH und deren Mischungen ausgewählt sind.

5. Vorrichtung nach einem der Ansprüche 1 bis 3, wobei die vernetzten Nanofasern und/oder Mikrofasern aus Zellulose durch positiv geladene und/oder in Gegenwart von Wasser positiv geladene Gruppen funktionalisiert sind, vorzugsweise durch Gruppen, die aus der quaternären Ammoniumgruppe -N(R)₃⁺ mit R als ein C1-C4-Alkyl, der tertiären Ammoniumgruppe -N(H)R)₂⁺ mit R als ein C1-C4-Alkyl, vorzugsweise einem C1-Alkyl, der Dimethylhydroxyethylammoniumgruppe -N(C₂H₄OH)CH₃)₂⁺ und deren Mischungen ausgewählt sind.

6. Vorrichtung nach einem der vorstehenden Ansprüche, wobei die Membran eine einzige Schicht (101) aus einem Zellulosematerial umfasst, das ein Netzwerk aus vernetzten Nanofasern und/oder Mikrofasern aus Zellulose umfasst.

7. Vorrichtung nach einem der Ansprüche 1 bis 5, wobei die Membran eine Verbundmembran ist, die zwei Außenschichten (101, 103) umfasst, die jeweils aus einem Zellulosematerial gebildet sind, das ein Netzwerk aus vernetzten Nanofasern und/oder Mikrofasern aus Zellulose umfasst, zwischen denen eine Innenschicht (102) angeordnet ist, die aus einem zweiten Material gebildet ist, das Nanopartikel umfasst, die durch geladene Gruppen und/oder Gruppen, die in Gegenwart von Wasser geladen werden, funktionalisiert sind.

8. Vorrichtung nach vorstehendem Anspruch, wobei die Dicke jeder der Außenschichten (101, 103) in vorteilhafter Weise zwischen 2 µm und 25 µm liegt und die Dicke der Innenschicht (102) zwischen 10 nm und 2 µm liegt.

9. Vorrichtung nach einem der Ansprüche 7 bis 8, wobei die Nanopartikel lamellare Nanopartikel sind, vorzugsweise lamellare Nanopartikel aus einem Metalloxid, einem Dichalkogenid eines Übergangsmetalls wie Molybdändisulfid, Kohlenstoff oder eine Mischung davon, vorzugsweise ebenfalls lamellare Nanopartikel aus Graphenoxid, die an der Oberfläche mit negativ geladenen Gruppen oder Gruppen, die in Gegenwart von Wasser negativ geladen werden, funktionalisiert sind.

10. Verfahren zur Erzeugung elektrischer Energie unter Verwendung einer Vorrichtung nach einem der vorstehenden Ansprüche, umfassend die folgenden Schritte:
i) Bereitstellen einer Elektrolytlösung (22A) mit einer Konzentration C_{A} eines gelösten Stoffes im Behälter A (20A), derart, dass die darin befindliche Elektrode (30A) mit der Lösung (22A) in Kontakt steht,
ii) Bereitstellen einer Elektrolytlösung (22B) mit einer Konzentration C_{B} desselben gelösten Stoffes, wobei C_{B} kleiner als C_{A} ist, im Behälter B (20B), derart, dass die darin befindliche Elektrode (30B) mit der Lösung (22B) in Kontakt steht,
iii) Diffundieren der Elektrolyte aus dem Behälter A durch die Membran (10) in den Behälter B,
iv) Auffangen der durch die zwischen den beiden Elektroden bestehende Potentialdifferenz erzeugte elektrische Energie mit Hilfe der Vorrichtung (32).

11. Verfahren nach vorstehendem Anspruch, **dadurch gekennzeichnet, dass** die Elektrolytlösungen wässrige Lösungen sind, die einen gelösten Stoff enthalten, der aus den Alkalihalogeniden oder den Erdalkalihalogeniden ausgewählt ist, vorzugsweise aus NaCl, KCl, CaCl₂ und MgCl₂.

12. Verfahren nach einem der Ansprüche 10 bis 11, **dadurch gekennzeichnet, dass** das Konzentrationsverhältnis C_{A}/C_{B} größer als 1 und kleiner oder gleich 10⁹ ist, vorzugsweise größer als 1 und kleiner oder gleich 10⁵.

## Claims

1. A device for producing electrical energy comprising:
a) a first reservoir A (20A) intended to receive an electrolytic solution (22A) having a concentration C_{A} of a solute and comprising an electrode (30A) in contact with the electrolytic solution having a concentration C_{A};
b) a second reservoir B (20B) intended to receive an electrolytic solution (22B) having a concentration C_{B} of the same solute, C_{B} being lower than C_{A}, and comprising an electrode (30B) in contact with the electrolytic solution having a concentration C_{B};
c) a membrane (10) separating the two reservoirs, said membrane comprising pores allowing the electrolytes to diffuse from reservoir A to reservoir B through said pore or pores; and
d) a device (32) allowing to supply the electrical energy generated by the potential differential existing between the two electrodes, **characterized in that** the membrane comprises at least one layer formed of a cellulosic material comprising a network of crosslinked cellulose nanofibers and/or microfibers.

2. The device according to claim 1, wherein the thickness of the membrane is between 2 µm and 100 µm, preferably between 2 µm and 75 µm.

3. The device according to any one of the preceding claims, wherein the membrane comprises from 10 to 20 g of cellulosic material per m² of membrane, preferably 15 to 20 g of cellulosic material per m² of membrane.

4. The device according to any one of the preceding claims, wherein the nanofibers and/or the crosslinked cellulose microfibers are functionalized by negatively charged groups and/or groups which become negatively charged in the presence of water, preferably groups selected from the sulfonate group -SO₃⁻, the carboxylate group -CO₂⁻, the aminodiacetate group -N(CH₂CO₂⁻)₂, the phosphonate group PO₂³⁻; the amidoxine group -C(=NH₂)(NOH), the aminophosphonate group -CH₂-NH-CH₂-PO₃²⁻, the thiol group -SH, and mixtures thereof.

5. The device according to any one of claims 1 to 3, wherein the nanofibers and/or the crosslinked cellulose microfibers are functionalized by positively charged groups and/or groups which become positively charged in the presence of water, preferably groups selected from the quaternary ammonium group -N(R)₃⁺ with R a C1-C4 alkyl, the tertiary ammonium group -N(H)R)₂⁺ with R a C1-C4 alkyl, preferably a C1 alkyl, dimethylhydroxyethylammonium group -N(C₂H₄OH)CH₃)₂⁺, and mixtures thereof.

6. The device according to any one of the preceding claims, wherein the membrane comprises a single layer (101) formed of a cellulosic material comprising a network of crosslinked cellulose nanofibers and/or microfibers.

7. The device according to any one of claims 1 to 5 wherein the membrane is a composite membrane comprising two outer layers (101,103) each formed of a cellulosic material comprising a network of crosslinked cellulose nanofibers and/or microfibers, between which is disposed an inner layer (102) formed of a second material comprising nanoparticles functionalized by charged groups and/or groups which become charged in the presence of water.

8. The device according to the preceding claim, wherein the thickness of each of the outer layers (101, 103) is advantageously between 2 µm and 25 µm, and the thickness of the inner layer (102) is between 10 nm and 2 µm.

9. The device according to any one of claims 7 to 8, wherein the nanoparticles are lamellar nanoparticles, preferably lamellar nanoparticles of a metal oxide, of a dichalcogenide of a transition metal such as molybdenum disulfide, carbon, or a mixture thereof, more preferably lamellar nanoparticles of graphene oxide functionalized at the surface by negatively charged groups or groups which become negatively charged in the presence of water.

10. A method for producing electrical energy using a device as described in any one of the preceding claims, comprising the following steps:
i) supplying an electrolytic solution (22A) having a solute concentration C_{A} in reservoir A (20A), so that the electrode (30A) with which it is equipped is in contact with said solution (22A),
ii) supplying an electrolytic solution (22B) having a concentration C_{B} of the same solute, C_{B} being lower than C_{A}, in the reservoir B (20B), so that the electrode (30B) with which it is equipped is in contact with said solution (22B),
iii) allowing the electrolytes to diffuse from reservoir A to reservoir B through the membrane (10),
iv) capturing the electrical energy generated by the potential differential existing between the two electrodes, using the device (32).

11. The method according to the preceding claim, **characterized in that** said electrolytic solutions are aqueous solutions comprising a solute selected from alkali halides or alkaline earth halides, preferably selected from NaCl, KCI, CaCl₂ and MgCl₂.

12. The method according to any one of claims 10 to 11, **characterized in that** the concentration ratio C_{A}/C_{B} is greater than 1 and less than or equal to 10⁹, preferably greater than 1 and less than or equal to 10⁵.
